Europäisches Patentamt

European Patent Office

Office européen des brevets

(19)

(11) Publication number: **0 266 221 B1**

## EUROPEAN PATENT SPECIFICATION

(12)

(45) Date of publication of patent specification: **09.03.94**    (51) Int. Cl.⁵: **C08L  77/00,** C08L 51/04, C08L 51/06

(21) Application number: **87309642.4**

(22) Date of filing: **30.10.87**

(54) **Thermoplastic elastomer composition.**

(30) Priority: **30.10.86 JP 256871/86**
**18.05.87 JP 118942/87**

(43) Date of publication of application:
**04.05.88 Bulletin  88/18**

(45) Publication of the grant of the patent:
**09.03.94 Bulletin  94/10**

(84) Designated Contracting States:
**DE FR GB IT NL**

(56) References cited:
**WO-A-86/04076**
**GB-A- 2 052 528**

**WPIL, FILE SUPPLIER, no. AN=84-246065, Derwent Publications Ltd, London, GB; & JP-A-59 147 008**

Yushudai Nishi
Ichihara-shi Chiba-ken(JP)
Inventor: **Maeda, Toshiyuki**
**1, 1-chome**
**Yushudai Higashi**
**Ichihara-shi Chiba-ken(JP)**
Inventor: **Tojo, Tetsuo**
**5, 2-chome**
**Yushudai Nishi**
**Ichihara-shi Chiba-ken(JP)**
Inventor: **Okamoto, Katsuo**
**1580-2, 3-chome**
**Hazama-cho**
**Funabashi-shi Chiba-ken(JP)**
Inventor: **Sakamaki, Noboru**
**4, 2-chome**
**Yushydai Nishi**
**Ichihara-shi Chiba-ken(JP)**

(73) Proprietor: **MITSUI PETROCHEMICAL INDUSTRIES, LTD.**
**2-5, Kasumigaseki 3-chome**
**Chiyoda-ku**
**Tokyo 100(JP)**

(72) Inventor: **Otawa, Yasuhiko**
**5, 2-chome**

(74) Representative: **Cresswell, Thomas Anthony et al**
**J.A. KEMP & CO.**
**14 South Square**
**Gray's Inn**
**London WC1R 5LX (GB)**

EP 0 266 221 B1

# EP 0 266 221 B1

## Description

The present invention relates to a composition comprising a graft-modified polyolefin type elastomer and a polyamide. More particularly, the present invention relates to a resin composition comprising a blend of (a) a graft-modified ployolefin type elastomer and (b) a polyamide, said graft-modified polyolefin type elastomer being partially crosslinked by dynamically heat-treating a mixture of a peroxide-crosslinkable olefin copolymer rubber and an olefinic plastic with an unsaturated carboxylic acid or derivative thereof, an unsaturated epoxy monomer or an unsaturated hydroxy monomer in the presence of an organic peroxide. The invention also relates to a process for producing these compositions.

Thermoplastic elastomers have been known as energy-saving and resource-saving substitutes for cured rubber, and have been used as automobile parts (bellows, tubes, interior sheets and mudguards), industrial machine parts (pressure-resistant hoses, gaskets and diaphragms), electronic and electric machine parts and construction materials.

A thermoplastic elastomer composition comprising a crystalline thermoplastic polyolefin resin and a cured ethylene/propylene/polyene copolymer rubber is disclosed in JP-B-46138/83 or JP-B-18448/80. This composition, however, is defective in that the balance between the rubbery elasticity and the mechanical strength is bad.

Furthermore, a thermoplastic elastomer composition comprising a blend of an ethylene/propylene/polyene copolymer rubber, an acrylonitrile/butadiene copolymer rubber, a polypropylene resin and a nylon resin is known from U.S.-A-4,338,413. This composition has a high oil resistance and other good properties, but the composition is fatally defective in that the resistance to heat aging and weatherability are poor.

Furthermore, a composition comprising a modification product of a mixture of a polyolefin resin and an ethylene/α-olefln copolymer with an α,β-unsaturated carboxylic acid and a polyamide is known from JP-A-8246/82. This composition has excellent mechanical strength, but poor softness, which is one of the important properties required for the thermoplastic elastomer.

Thus no thermoplastic elastomer composition having excellent oil resistance, mechanical strength and resistance to heat aging has been developed, so far as we know.

A large demand is expected for polyamide resins as engineering plastics because these resins have excellent physical properties. However, polyamide resins are generally insufficient in such properties as impact resistance at low temperatures, water resistance and salt water resistance, and it is desired that these properties will be improved. As the means for improving impact resistance characteristics, prior art references such as JP-B-12546/67, JP-B-44108/80 and JP-A-9962/80 propose methods in which a modified α-olefin elastic copolymer such as an ethylene/α-olefin copolymer grafted with an α,β-unsaturated carboxylic acid is incorporated into a polyamide resin. The compositions proposed in these prior art references are defective in that if the impact resistance characteristics such as the Izod impact strength are improved, the rigidity is drastically reduced, the falling weight impact strength at low temperatures is insufficient, and practical molded articles having a high rigidity and a high impact strength can hardly be obtained from these compositions. Furthermore, the melt flowability is often reduced excessively, and the compositions are defective in that the moldability and processability are degraded in some molding methods.

GB-A-2052 528 describes polyamide compositions comprising a polyolefin modified with an alicyclic carboxylic acid or functional derivative thereof having a cis-double bond in the ring.

As a composition in which the foregoing defects are eliminated, that is, a polyamide composition in which the impact resistance and the rigidity are well-balanced, there is proposed a resin composition comprising a polyamide resin and a modified polyolefin obtained by grafting an ethylene/α-olefin copolymer having a crystallinity lower than 35%, which is obtained by using specific catalyst, with an unsaturated carboxylic acid or a derivative thereof (see JP-A-147008/84). However, even if this specific modified polyolefin is used, improvements in rigidity, tensile strength and the like are still insufficient.

We found that in the case where a polyamide is blended with a specific partially crosslinked graft-modified poly-olefin elastomer obtained by dynamically heat-treating a blend of a peroxide-crosslinking olefin copolymer rubber and an olefinic plastic with an unsaturated carboxylic acid or derivative thereof or an unsaturated epoxy monomer or an unsaturated hydroxy monomer in the presence of an organic peroxide, if the graft-modified polyolefin elastomer occupies a major portion, a composition with excellent oil resistance, mechanical strength and resistance to heat aging is obtained and if the polyamide occupies a major portion, a composition having excellent impact resistance, rigidity and tensile strength is obtained. We have now completed the present invention based on this finding.

More specifically, in accordance with the present invention, there is provided a thermoplastic resin composition which comprises (a) a partially crosslinked graft-modified thermoplastic elastomer obtainable by dynamically heat treating a blend comprising (i) 10 to 95 parts by weight of a peroxide-crosslinking olefin copolymer rubber, (ii) 5 to 90 parts by weight of a crystalline high molecular weight solid polymer selected from isotactic and syndiotactic homopolymers and copolymer resins of propylene, 1-butene, 1-pentene, 1-hexene, 2-methyl-1-propene, 3-methyl-1-pentene, 4-methyl-1-pentene and 5-methyl-1-hexene and polyethylene, the sum of the amounts of the components (i) and (ii) being 100 parts by weight, and (iii) 0.01 to 10 parts by weight of at least one monomer selected from (1) unsaturated carboxylic acids and derivatives thereof, (2) unsaturated epoxy monomers and (3) unsaturated hydroxy monomers in the presence of an organic peroxide and (b) a polyamide in proportions defined below.

In accordance with one aspect of the present invention (see claim 1) there is provided a thermoplastic resin composition as set forth above, wherein the amount of the graft-modified polyolefin elastomer (a) is from 5 to 50 parts by weight and the amount of the polyamide (b) is larger than 50 parts by weight but not more than 95 parts by weight.

In accordance with the second aspect of the present invention (see claim 2) there is provided a thermoplastic resin composition, as set forth above, wherein the amount of the graft-modified polyolefin elastomer (a) is larger than 50 parts by weight but not more than 95 parts by weight and the amount of the polyamide (b) is from 5 to 50 parts by weight.

In accordance with a preferred embodiment of each of these aspects of the present invention, there is provided a thermoplastic resin composition as set forth above, wherein the graft-modified polyolefin elastomer blend comprising (i), (ii) and (iii) (prior to dynamic heat treatment) further comprises (iv) 0 to 100 parts by weight of a peroxide-non-crosslinkable rubbery substance and/or (v) 0 to 200 parts by weight of a mineral oil type softener, per 100 parts by weight of the sum of the amounts of the compoents (i) and (ii).

Thus the thermoplastic resin composition of the present invention is prominently characterized in that the elastomer component to be blended in the polyamide is a partially crosslinked graft-modified polyolefin elastomer obtainable by dynamically heat-treating a mixture of a peroxide-crosslinkable olefin copolymer rubber and an olefinic plastic with an unsaturated carboxylic acid or derivative thereof, an unsaturated epoxy monomer or an unsaturated hydroxy monomer in the presence of an organic oxide. In the resin composition of the present invention, if the elastomer component occupies a major portion, the oil resistance, mechanical strength and resistance to heat aging are highly improved, and if the polyamide component occupies a major portion, the rigidity, impact strength, flowability and heat resistance are highly improved.

In that aspect of the present invention where the modified polyolefin elastomer occupies a major portion of the composition, since the modified polyolefin elastomer as the component (a) is composed of a partially crosslinked olefin copolymer and an olefinic plastic, preferably a peroxide-decomposing olefinic plastic, the component (a) maintains the flowability, the heat resistance and the resistance against heat aging at high levels and imparts a good rubbery elasticity to the composition.

The polyamide as the component (b) imparts a good oil resistance and a good flowability and moldability of the composition can be maintained at predetermined levels.

The reason why the merits of the components (a) and (b) are sufficiently exerted in the thermoplastic elastomer composition of the present invention is that the component (a) is uniformly modified with the unsaturated carboxylic acid or derivative thereof, the unsaturated epoxy monomer or the unsaturated hydroxy monomer, and thus easily forms a physical or chemical bonding to the component (b), and the strength of the interface of the blend is greatly increased as compared with the case where the component (a) is in the unmodified state or a third component having a segment compatible with the components (a) and (b), is incorporated.

As is apparent from the foregoing description, in this aspect by the actions of the respective components, a thermoplastic resin composition having excellent oil resistance, mechanical strength and resistance to heat aging can be provided.

In the other aspect of the present invention where the polyamide occupies a major portion, the modified polyolefin elastomer as the component (a) exerts the function of imparting high impact strength, good flowability and high heat resistance.

The polyamide as component (b) exerts the function of imparting a high rigidity, a high heat resistance and a good flowability at a high temperature.

As is apparent from the foregoing description, in this aspect, a thermoplastic resin composition having excellent rigidity, impact resistance and heat resistance is provided.

The respective components of the thermoplastic elastomer composition of the present invention will now be described.

3

(i) Peroxide-crosslinkable olefin copolymer rubber

The peroxide-crosslinkable olefin copolymer rubber used in the present invention is an amorphous elastic copolymer comprising an olefin as the main component, such as an ethylene/propylene copolymer rubber, an ethylene/propylene/non-conjugated diene rubber and an ethylene/butadiene copolymer rubber; these rubbers are such that when mixed with an organic peroxide and kneaded under heating, the flowability is reduced or completely lost. As the non-conjugated diene, there can be mentioned dicyclopentadiene, 1,4-hexadiene, dicyclooctadiene, methylene-norbornene and 5-ethylidene-2-norbornone.

Of these copolymer rubbers, an ethylene/propylene copolymer rubber and an ethylene/propylene/non-conjugated diene rubber are preferably used, and a copolymer rubber in which the molar ratio between ethylene units and propylene units (ethylene/propylene molar ratio) is from 50/50 to 90/10, especially from 55/45 to 85/15, is preferred. An ethylene/propylene/non-conjugated diene copolymer rubber, particularly an ethylene/propylene/5-ethylidene-2-norbornene copolymer rubber or an ethylene/propylene/5-ethylidene-2-norbornene/dicyclopentadiene quadripolymer, is especially preferred because a thermoplastic elastomer having excellent heat resistance, tensile characteristics and repulsion elasticity can be obtained.

In order to obtain a composition excellent in the tensile characteristics and flowability, it is preferred that the Mooney viscosity $M_{1+4}$ (100°) of the copolymer rubber be 10 to 120, especially 40 to 80.

It also is preferred that the iodine value (unsaturation degree) of the copolymer rubber be smaller than 16. If this requirement is satisfied, a thermoplastic elastomer which has a good balanced between flowability and rubbery properties can be obtained.

(ii) Olefinic plastic

The component (ii) is a crystal line, high molecular weight solid product obtained by polymerizing at least one mono-olefin according to the high-pressure method or low-pressure method and is hereafter referred to as the "olefinic plastic".

Suitable isotactic and syndiotactic mono-olefin homopolymer and copolymer resins for use as the olefinic plastic are commercially available.

In the present invention, polyethylene and a peroxide-decomposing olefinic plastic are especially preferred as the olefinic plastic.

By the peroxide-decomposing olefinic plastic is meant an olefinic plastic which when mixed with a peroxide and kneaded under heating, the molecular weight is decreased by thermal decomposition and the flowability of the resin is increased. For example, there can be mentioned isotactic polyproylene and copolymers of propylene with a minor amount of other $\alpha$-olefin, such as a propylene/ethylene copolymer, a propylene/1-hexene copolymer and a propylene/4-methyl-1-penten copolymer. It is preferred that the melt index (ASTM D-1238-65T, 230°C) of the incorporated olefinic plastic be 0.1 to 50, especially 5 to 20.

In the present invention, the olefinic plastic exerts the effects of improving the flowability and heat resistance of the composition.

(iii) Unsaturated carboxylic acid or derivative thereof or unsaturated epoxy monomer or unsaturated hydroxy monomer

In the present invention, as the unsaturated carboxylic acid or derivative thereof as the component (iii), there can be used $\alpha,\beta$-unsaturated carboxylic acids such as acrylic acid, methacrylic acid, maleic acid, fumaric acid, itaconic acid, citraconic acid, tetrahydrophthalic acid and bicyclo(2,2,1)hept-2-ene-5,6-dicarboxylic acid, unsaturated carboxylic anhydrides such as maleic anhydride, itaconic anhydride, citraconic anhydride, tetrahydrophthalic anhydride and bicyclo(2,2,1)hept-2-ene-5,6-dicarboxylic anhydride, and unsaturated carboxylic acid esters such as methyl acrylate, methyl methacrylate, dimethyl maleate, monomethyl maleate, diethyl fumarate, dimethyl itaconate, diethyl citraconate, dimethyl tetrahydrophthalate and dimethyl bicyclo(2,2,1)hept-2-ene-5,6-dicarboxylate. Of these compounds, maleic acid, bicyclo(2,2,1)hept-2-ene-5,6-dicarboxylic acid and anhydrides thereof are preferred.

As the unsaturated epoxy monomer used as the component (iii) in the present invention, there can be mentioned, for example, glycidyl esters of unsaturated monocarboxylic acids such as glycidyl acrylate, glycidyl methacrylate and glycidyl p-styrylcarboxylic acid, monoglycidyl and diglycidyl esters of unsaturated polycarboxylic acids such as maleic acid, itaconic acid, citraconic acid, butene-tricarboxylic acid, endo-cis-bicyclo(2,2,1)hept-5-ene-2,3-dicarboxylic acid and endo-cis-bicyclo(2,2,1)hept-5-ene-2-methyl-2,3-dicarboxylic acid, unsaturated glycidyl ethers such as allylglycidyl ether, 2-methylallylglycidyl ether, o-allylphenol glycidyl ether, m-allylphenol glycidyl ether, m-allylphenol glycidyle ether, p-allylphenol glycidyl

4

ether, isopropenylphenol glycidyl ether, o-vinylphenol glycidyl ether, m-vinylphenol glycidyl ether and p-vinylphenol glycidyl ether and 2-(o-vinylphenyl)-ethylene oxide, 2-(p-vinylphenyl)-ethylene oxide, 2-(o-vinylphenyl)-propylene oxide, 2-(p-vinylphenyl)-propylene oxide, 2-(o-allylphenyl)-ethylene oxide, 2-(p-allylphenyl)-ethylene oxide, 2-(o-allylphenyl)-propylene oxide 2-(p-allylphenyl)-propylene oxide, p-glycidylstyrene, 3,4-epoxy-1-butene, 3,4-expoxy-3-methyl-1-butene, 3,4-expoxy-3-methyl-1-1-butene, 3,4-expoxy-1-pentene, 3,4-expoxy-3-methyl-1-pentene, 5,6-epoxy-1-hexene, vinylcyclohexene mono-oxide and allyl-2,3-epoxycyclopentyl ether.

The unsaturated hydroxy monomer as component (iii) is a monomer having at least one ethylenic unsaturated bond and at least one hydroxyl group. For example, there can be mentioned hydroxyethyl acrylate, hydroxypropyl acrylate, hydroxyethyl methacrylate, hydroxypropyl methacrylate, polyethylene glycol monomethacrylate and polypropylene glycol monomethacrylate. Hydroxyethyl (meth)acrylate and hydroxypropyl (meth)acrylate are especially preferred.

The component (iii) acts as a grafting modifier during the dynamic heat treatment described hereinafter to reinforce the blend interface between the polyamide and the graft-modified polyolefin elastomer and improve the impact resistance of the thermoplastic resin composition.

In the present invention, the graft-modified polyolefin elastomer, or the blend comprising(i), (ii) and (iii) before dynamic heat treatment, may further comprise (iv) a peroxide-non-crosslinkable rubbery substance and/or (v) a mineral oil type softener.

(iv) Peroxide-non-crosslinkable rubbery substance

A hydrocarbon type rubbery substance which even when mixed with a peroxide and kneaded under heating, is not crosslinked and suffers no reduction of flowability is used as the peroxide-non-crosslinkable rubbery substance (iv). For example, there can be mentioned polyisobutylene, butyl rubber, a propylene/ethylene copolymer rubber having a propylene content of at least 70 mole% and atactic polypropylene. In view of the performance and the ease of handling, polyisobutylene is especially preferred as the component (iv).

The component (iv) exerts the function of improving the flowability of the thermoplastic resin composition. It is preferred that the Mooney viscosity of the component (iv) be lower than 60.

(v) Mineral oil type softener

The mineral oil type softener as the component (v) is a high boiling point petroleum fraction ordinarily used for weakening the intermolecular force of a rubber during roll processing of the rubber to facilitate that processing, to assist the dispersion of carbon black or white carbon incorporated as a filler, or to reduce the hardness of a cured rubber to increase the softness and elasticity; this fraction includes paraffin type, naphthene type and aromatic type oils.

Graft-modified polyolefin elastomer (a)

According to the present invention, the graft-modified polyolefin elastomer (a) is prepared by blending (i) 10 to 95 parts by weight, especially preferably 60 to 95 parts by weight, of the peroxide-crosslinkable olefin copolymer rubber, (ii) 5 to 90 parts by weight, expecially preferably 5 to 40 parts by weight, of the olefinic plastic the sum of the amounts of the components (i) and (ii) is 100 parts by weight and (iii) 0.01 to 10 parts by weight, especially 0.1 to 5 parts by weight, of the unsaturated carboxylic acid or derivative thereof, the unsaturated expoxy monomer or the unsaturated hydroxy monomer and dynamically heat-treating the blend in the presence of an organic peroxide to effect partial crosslinking.

If the copolymer rubber component (i) is used in an amount within the above-mentioned range, a composition having excellent rigidity, flowability, heat resistance and impact resistance can be obtained.

If the olefinic plastic (ii) is incorporated in an amount within the above-mentioned range, a composition having excellent impact resistance, flowability and moldability can be obtained.

The impact resistance and flowability can be improved if the unsaturated carboxylic acid or derivative thereof the unsaturated epoxy monomer or the unsaturated hydroxy monomer (iii) is used in an amount within the above-mentioned range.

In the present invention, it is preferred that the components (iv) and (v) be incorporated at the blending step. Namely, it is preferred that the peroxide-non-crosslinkable rubbery substance (iv) be incorporated in an amount of 0 to 100 parts by weight, preferably 5 to 100 parts by weight, especially preferably 5 to 50 parts by weight, and the mineral oil type softener (v) be incorporated in an amount of 0 to 200 parts by weight, preferably 3 to 100 parts by weight, especially preferably 5 to 80 parts by weight, per 100 parts by weight of the sum of the amounts of the components (i) and (ii).

A filler or colorant can be incorporated in the thermoplastic resin composition, so far as the flowability (moldability) and the impact resistance characteristics of the final composition are not degraded. As the filler, there can be mentioned calcium carbonate, clay, kaolin, talc, silica, diatomaceous earth, mica powder, asbestos, alumina, barium sulfate, aluminum sulfate, calcium sulfate, basic magnesium carbonate, molybdenum disulfide, graphite, glass fiber, glass bead, shirasu balloon and carbon fiber, and as the colorant, there can be mentioned carbon black titanium oxide, zinc flower, red iron oxide, ultramarine, prussian blue, an azo pigment, a nitroso pigment, a lake pigment and a phthalocyanine pigment.

Furthermore, in the present invention, known heat stabilizers such as phenol type, sufite type, phenylalkane type, phosphite type and amine type stabilizers, aging-preventing agents, weathering agents, antistatic agents, and lubricants such as metal soaps and waxes can be incorporated in amounts customarily used for olefinic plastics or olefin copolymer rubbers.

In the present invention, the blend comprising the above-mentioned components is dynamically heat-treated in the presence of an organic peroxide to effect partial crosslinking and prepared a modified polyolefin elastomer (a). By the dynamic heat treatment is meant kneading in the molten state.

As the organic peroxide used in the present invention, there can be mentioned dicumyl peroxide, ditert-butyl peroxide, 2,5-dimethyl-2,5-di-(tert-butylperoxy)hexane, 2,5-dimethyl-2,5-di-(tert-butylperoxy)hexine-3, 1,3-bis(tert-butylperoxy-isopropyl)benzene, 1,1-bis(tert-butylperoxy)-3,3,5-trimethylcyclohexane, n-butyl-4,4-bis(tert-butylperoxy)valelate, benzoyl peroxide, p-chlorobenzoyl peroxide, 2,4-dichlorobenzoyl peroxide, tert-butyl peroxybenzoate, tert-butyl perbenzoate, tert-butylperoxyisopropyl carbonate, diacetyl peroxide, lauroyl peroxide and tert-butylcumyl peroxide.

Of these peroxides, in view of the smell and scorch stability, 2,5-dimethyl-2,5-di-(tert-butylperoxy)-hexane, 2,5-dimethyl-2,5-di-(tert-butylperoxy)hexine-3, 1,3-bis(tert-butylperoxyisopropyl)benzene, 1,1-bis-(tert-butylperoxy)-3,3,5-trimethylcyclohexane and n-butyl-4,4-bis(tert-butylperoxy)valelate are preferred, and 1,3-bis(tert-butylperoxyisopropyl)benzene is most preferred.

The organic peroxide is incorporated in an amount of 0.05 to 3% by weight, especially 0.1 to 1% by weight, based on the total amount of the components (i), (ii) and (iii).

If the amount of the organic peroxide is within the above mentioned range, the obtained composition has excellent impact resistance, heat resistance and flowability.

Known kneading devices such as an open mixing roll, a closed Banbury mixer, an extruder, a kneader and a continuous mixer can be used.

It is preferred that kneading be carried out in a closed apparatus in an atmosphere of an inert gas such as nitrogen or carbon dioxide gas. The kneading temperature is such that the half-value period of the used organic peroxide is shorter than 1 minute. More specifically, the kneading temperature is ordinarily 150 to 280°C and preferably 170 to 240°C. The kneading time is ordinarily 1 to 20 minutes and preferably 3 to 10 minutes.

In the present invention, during the partial crosslinking treatment with the organic peroxide, there can be used peroxy-crosslinking assistants such as p-quinone dioxime, p,p′-dibenzoylquinone dioxime, N-methyl-N,N-dinitrosoaniline, nitrobenzene, diphenylguanidine, trimethylolpropane-N,N′-m-phenylene maleimide and N-methyl-N,N'-m-phenylene dimaleimide,divinylbenzene, triallyl isocyanurate, polyfunctional methacrylate monomers such as ethylene glycol dimethacrylate, diethylene glycol dimethacrylate, polyethylene glycol dimethacrylate, trimethylolpropane trimethacrylate and allyl methacrylate, and polyfunctional vinyl monomers such as vinyl butyrate and vinyl stearate. It is expected that if such a compound as described above is used, the crosslinking reaction will be advanced uniformly and mildly. In the present invention, especially, if divinylbenzene is used, since divinylbenzene is easy to handle, has good compatibility with the olefinic plastic as the main component to be treated and acts as a dispersing agent for the organic peroxide by its organic peroxide-solubilizing action, a uniform crosslinking effect is attained by the heat treatment and a composition which has well-balanced flowability and physical properties can be obtained. Therefore, use of divinylbenzene is most preferred in the present invention. In the present invention, it is preferred that the above-mentioned crosslinking agent or polyfunctional vinyl monomer be incorporated in an amount of 0.1 to 2% by weight, especially 0.3 to 1% by weight, based on the total amount of the components to be treated.

If the crosslinking agent or polyfunctional vinyl monomer is incorporated in an amount within the above-mentioned range, the flowability of the composition is improved, and even if the composition undergoes heat history, the physical properties are not changed.

A decomposition promoter may be incorporated so as to promote decomposition of the organic peroxide. As the decomposition promoter, there can be mentioned tertiary amines such as triethylamine, tributylamine and 2,4,6-tris(dimethylamino)phenol, and naphthenic acid salts of metals such as aluminum, cobalt, vanadium, manganese, magnesium, lead and mercury.

It is preferred that kneading be carried out in a closed apparatus in an atmosphere of an inert gas such as nitrogen or carbon dioxide gas. The kneading temperature is such that the half-value period of the used organic peroxide is shorter than 1 minute. More specifically, the kneading temperature is ordinarily 150 to 280°C and preferably 170 to 240°C. The kneading time is ordinarily 1 to 20 minutes and preferably 1 to 10 minutes. The shearing force is selected so that the shearing speed is ordinarily 10 to $10^4$ sec$^{-1}$ and preferably $10^2$ to $10^3$ sec$^{-1}$.

As the kneading device, there can be mentioned a mixing roll, an intensive mixer such as a Banbury mixer, a kneader and a monoaxial or biaxial extruder, and use of a closed kneading device is preferred.

According to the present invention a partially crosslinked thermoplastic elastomer (a) graft-modified with the component (iii) is obtained by the dynamic heat treatment in the presence of the organic peroxide.

Incidentally, in the present invention, by the term "partial crosslinking", it is meant that the gel content is 45 to 98%, as determined according to the following method:

Method for determination of gel content

About 100 mg of a sample of a thermoplastic elastomer is weighed and cut into small pieces having a size of 0.5mm x 0.5mm x 0.5mm, and the cut pieces are immersed in 30ml for cyclohexane at 23°C for 48 hours in a sealed vessel. Then, the sample is recovered on a filter paper and dried at room temperature for more than 72 hours until the weight no longer changes.

The weight of the cyclohexane-insoluble components except the polymer component (for example, fibrous filler, filler, pigment and the like) and the weight of the olefinic plastic in the sample before immersion in cyclohexane are subtracted from the weight of the dried residue. The obtained value is designated as "corrected final weight (Y)".

The weight of the peroxide-crosslinking olefin copolymer in the sample (namely, the value obtained by subtracting (1) the weight of olefinic plastic and (2) the weight of the cyclohexane-soluble components other than the peroxide-crosslinking olefin copolymer rubber (for example, mineral oil and plasticizer) and (3) the weight of the cyclohexane-insoluble components other than the polymer component (fibrous filler, filler, pigment and the like) from the weight of the sample) is designated as "corrected initial weight (X)".

The gel content is calculated according to the following formula:

$$\text{Gel content (\% by weight)} = \frac{\underline{\text{corrected final Weight (Y)}}}{\text{corrected initial Weight (X)}} \times 100$$

Polyamide (b)

As the polyamide (b) used in the present invention, there can be mentioned polyamides obtained by polycondensing aliphatic, alicyclic and aromatic diamines such as hexamethylene diamine, decamethylene diamine, dodecamethylene diamine, 2,2,3- or 2,2,4-trimethylhexamethylene diamine, 1,3- or 1,4-bis-(aminomethyl)cyclohexane, bis(p-aminocyclohexyl-methane) and m- or p-xylylene diamine with aliphatic, alicyclic and armaotic dicarboxylic acids such as adipic acd, suberic acid, sebacic acid, cyclohexane-dicarboxylic acid, terephthalic acid and isophthalic acid, polyamides obtained by condensing aminocarboxylic acids such as $\epsilon$-aminocaproic acid and 11-amino-undecanoic acid, polyamides obtained from lacams such as $\epsilon$-caprolactam and $\omega$-laurolactam, copolyamides composed of these components and mixtures of these polyamides. As specific examples, there can be mentioned nylon 6, nylon 66, nylon 610 nylon 9, nylon 11, nylon 12, nylon 6/66, nylon 66/610 and nylon 6/11. Of these polyamides, nylon 6 and nylon 66 are preferred in view of the mechanical strength and heat resistance of the thermoplastic resin composition.

As the method for mixing the modified polyolefin elastomer (a) and the polyamide (b), there can be mentioned a method in which primary mixing is carried out by using a Henschel mixer, a V-blender, a ribbon blender or a tumbler blender and the blend is melt-mixed at a temperature higher than the melting point of the polyamide (b) by using a monoaxial extruder, a biaxial extruder, a kneader or a Banbury mixer and is then granulated or pulverized.

Thermoplastic resin composition (1)

In accordance with that aspect of the present invention in which the graft-modified polyolefin elastomer (a) is present as a major portion of the composition, it is preferably present in an amount of 60 to 90 parts by weight, and the polyamide (b) is present in an amount of from 5 to 40 parts by weight, preferably from 10 to 40 parts by weight.

In this preferred resin composition (1), the interface of the blend between the polyamide and the modified polyolefin thermoplastic elastomer modified with an $\alpha,\beta$-unsaturated carboxylic acid or derivative thereof such a maleic anhydride or an unsaturated epoxy monomer is highly reinforced, and therefore, the resin composition (1) has excellent oil resistance, resistance to heat aging and mechanical strength; this resin composition is preferably used for the production of automobile parts (such as bellows, tubes, interior sheets and mudguards), industrial parts (such as pressure-resistant hoses, gaskets and diaphragms), electronic and electric machine parts and construction materials.

Thermoplastic resin composition (2)

In accordance with the other aspect, in which the polyamide (b) is present as a major composition of the composition, the graft-modified polyolfin elastomer is preferrably present in an amount of from 10 to 30 parts by weight, and the polyamide (b) is present in an amount preferably from 70 to 90 parts by weight.

This thermoplastic resin composition (2) has excellent rigidity, impact strength, flowability and heat resistance.

The thermoplastic resin composition (2) can be molded as an impact-resin according to known molding methods such as injection molding, extrusion molding, compression molding, hollow molding and foaming molding, and the thermoplastic resin composition (2) is suitably used for the production of pipes, pipe-coating materials, automobile parts, electric instrument parts, helmets and ski boots.

The present invention will now be described in detail with reference to the following examples that by no means limit the scope of the invention.

In the present invention, the content ratio between the components (i) and (ii) in the elastomer composition can be determined by the D.S.C. method or the infrared absorbency analysis method. The contents of the components (iv) and (v) in the composition can be determined by the solvent extraction method (Soxhlet extraction method using acetone as the solvent) or the infrared absorbance analysis method.

The content of the grafted component (iii) was measured by the infrared absorbance analysis method or the chemical analysis method.

Example 1

A blend comprising 80 parts by weight of an ethylene/propylene/ethylidene-norbornene copolymer rubber having an ethylene content of 70 mole%, an idodine value of 12 and a Mooney viscosity $M_{1+4}$ - (100°C) of 120 hereinafter referred to as "EPDM (1)" and 20 parts by weight of polypropylene having a melt index (ASTM D-1238-65T, 230°C) of 13 and a density of 0.91 g.cm$^3$ (hereinafter referred to as "PP") was kneaded at 180°C for 5 minutes in a nitrogen atmosphere by a Banbury mixer, and the kneaded blend passed through rolls and square pellets were prepared by a sheet cutter. Then, the so-obtained pellets were stirred and mixed with 0.3 part by weight of 1,3-bis(tert-butylperoxyisopropyl)benzene (hereinafter referred to as "peroxide (A)"), 0.5 part by weight of divinyl-benzene (hereinafter referred to as "DVB") and 0.5 part by weight of a maleic anhydride (hereinafter referred to as "MAH") by a Henschel mixer. The mixture was extruded at 220°C in a nitrogen atmosphere by a monoaxial extruder having an L/D ratio of 30 and a screw diameter of 50 mm to prepare a graft-modified polyolefin elastomer (a). The gel content of the copolymer rubber in the modified polyolefin elastomer (a) was determined according to the above-mentioned method. The measured value is shown in Table 1.

Then, 85 parts by weight of the modified polyolefin elastomer (a) and 15 parts by weight of a polyamide (Nylon 6 A1030BRF supplied by Unitica) were extruded at 250°C in a nitrogen atmosphere by a monoaxial extruder having an L/D ratio of 30 and a screw diameter of 50 mm. The obtained thermoplastic elastomer composition was compression-molded to obtain a sheet for determination of the physical properties. The following physical properties described below were measured. The obtained results are shown in Table 1.

Oil resistance ($\Delta V$, %):

According to JIS K-6301, the sample was immersed in JIS Oil No. 3 at 50°C for 7 days, and the increase ratio (%) of the volume by immersion was measured.

Strength ($T_B$, Kgf/cm$^2$):

According to JIS K-6301, the sample was pulled at a pulling speed of 200 mm/min and the tensile strength at break was measured.

Softness (torsion rigidity, Kgf/cm$^2$):

The torsion rigidity was determined according to the method of ASTM D-1043.

Moldability (MFR, g/10 min):

The melt flow rate was measured at 230°C under a load of 2.16 kg according to ASTM D-1238.

Resistance to heat aging $A_R$ ($E_B$), % :

According to JIS K-6301, the sample was allowed to stand in a gear oven at 135°C for 7 days, and the ratio of the elongation at break after the aging treatment to that before the aging treatment (retention ratio, %) was measured.

Comparative Example 1

The procedures of Example 1 were repeated in the same manner except that the amount incorporated of maleic anhydride was changed to zero.

Example 2

The procedures of Example 1 were repeated in the same manner except that the amount of DVB was changed to zero and the amounts of the modified polyolefin elastomer (a) and the polyamide (b) were changed to 70 parts by weight and 30 parts by weight, respectively.

Example 3

In a Henschel mixer, 80 parts by weight of a pelletized ethylene/propylene/ethylidene-norbornene copolymer rubber having an ethylene content of 70 mole%, an iodine value of 12 and a Mooney viscosity $M_{1+4}$ (100°C) of 120 hereinafter referred to as "EPDM" (2)" , 20 parts by weight of PP, 0.3 part by weight of peroxide (A), 0.5 part by weight of MAH and 0.5 part by weight of DVB were stirred and mixed. The mixture was extruded at 220°C in a nitrogen atmosphere by a biaxial extruder having an L/D ratio and a screw diameter of 53 mm to prepare a modified polyolefin elastomer (a). Then, the procedures of Example 1 were repeated in the same manner by using 55 parts by weight of the modified polyolefin elastomer (a) and 45 parts by weight of the polyamide (b).

Examples 4 and 5 and Comparative Example 2

The procedures of Example 1 were repeated in the same manner except that the amount incorporated of peroxide (A) was changed to 0.6 part by weight, 1 part by weight or 1.5 parts by weight and the amounts of MAH, the modified polyolefin elastomer (a) and the polyamide (b) were changed as shown in Table 1.

Examples 6 through 9 and Comparative Example 3

The procedures of Example 3 were repeated in the same manner except that the amounts of EPDM (1) and PP were changed as shown in Table 1.

9

Example 10

The procedures of Example 1 were repeated in the same manner except that at the step of forming the modified polyolefin elastomer (a), butyl rubber (IIR-065 supplied by Esso, unsaturation degree = 0.8 mole%) (hereinafter referred to as "IIR") and a paraffinic process oil were incorporated in addition to EPOM (1) and PP as shown in Table 1, and the amounts of the modified polyolefin elastomer (a) and the polyamide (b) were changed as shown in Table 1.

Example 11

The procedures of Example 10 were repeated in the same manner except that 0.5 part by weight of glycidyl methacrylate was incorporated instead of 0.5 part by weight of MAH.

Examples 12 and 14

The procedures of Example 10 were repeated in the same manner except that the amounts of EPDM (1), PP, IIR, paraffinic process oil, MAH, modified polyolefin elastomer (a) and polyamide (b) were changed as shown in Table 1.

Examples 13 and 15

The procedures of Example 11 were repeated in the same manner except that the amounts of EPDM (1), PP, IIR, paraffinic process oil, glycidyl methacrylate, modified polyolefin elastomer (a) and polyamide (b) were changed as shown in Table 1.

EP 0 266 221 B1

Table 1

| | E1 | R1 | E2 | E3 | E4 | E5 | R2 | E6 | E7 | E8 |
|---|---|---|---|---|---|---|---|---|---|---|
| **Composition (parts of weight) of Modified Polyolefin Elastomer (a)** | | | | | | | | | | |
| EPDM | 80 | 80 | 80 | 80 | 80 | 80 | 80 | 90 | 75 | 63 |
| Polypropylene | 20 | 20 | 20 | 20 | 20 | 20 | 20 | 10 | 25 | 37 |
| Butyl Rubber | - | - | - | - | - | - | - | - | - | - |
| Oil | - | - | - | - | - | - | - | - | - | - |
| Maleic Anhydride | 0.5 | 0 | 0.5 | 0.5 | 2 | 5 | 15 | 0.5 | 0.5 | 0.5 |
| Glycidyl Methacrylate | - | - | - | - | - | - | - | - | - | - |
| Gel Content(% by weight) | 93 | 90 | 94 | 94 | 96 | 98 | 98 | 90 | 85 | 80 |
| **Composition (parts by weight) and Physical Properties of Thermoplastic Resin Composition** | | | | | | | | | | |
| Modified Polyolefin Elastomer (a) | 85 | 85 | 70 | 55 | 85 | 85 | 85 | 85 | 85 | 85 |
| Polyamide (b) | 15 | 15 | 30 | 45 | 15 | 15 | 15 | 15 | 15 | 15 |
| Oil Resistance AV (%) | 75 | 190 | 45 | 5 | 76 | 78 | 75 | 80 | 70 | 65 |
| Strength $T_B$ (Kgf/cm$^2$) | 104 | 40 | 125 | 161 | 107 | 105 | 80 | 84 | 121 | 132 |
| Sfotness, Torsion Rigidity (Kgf/cm$^2$) | 105 | 100 | 350 | 620 | 101 | 105 | 100 | 92 | 280 | 560 |
| Moldability MFR (g/10 min.) | 1 | 5 | 5 | 30 | 0.8 | 0.5 | 0.05 | 0.7 | 1.5 | 20 |
| Resistance to Heat Aging, $A_B$ ($E_B$)(%) | 98 | 50 | 97 | 98 | 98 | 96 | 97 | 98 | 97 | 99 |

Note
E: Example
R: comparative Example
*: Hydroxypropylmethacrylate

Table 1 (continued)

| | E9 | R3 | E10 | E11 | E12 | E13 | E14 | E15 | E28 | E29 |
|---|---|---|---|---|---|---|---|---|---|---|
| **Composition (pats by weight) of Modified Polyolefin Elastomer (a)** | | | | | | | | | | |
| EPDM | 40 | 8 | 80 | 80 | 70 | 70 | 60 | 60 | 80 | 60 |
| Polypropylene | 60 | 92 | 20 | 20 | 30 | 30 | 40 | 40 | 20 | 40 |
| Butyl Rubber | - | - | 10 | 10 | 15 | 15 | 20 | 20 | 10 | 20 |
| Oil | - | - | 30 | 30 | 40 | 40 | 40 | 40 | 30 | 40 |
| Maleic Anhydride | 0.5 | 0.5 | 0.5 | - | 1.0 | - | 0.5 | - | 0.5 | 0.5 |
| Glycidyl Methacrylate | - | - | - | 0.5 | - | 1.0 | - | 0.5 | - | - |
| Gel content (% by weight) | 55 | 15 | 65 | 69 | 61 | 61 | 54 | 51 | 65 | 54 |
| **Composition (parts by weight) and Physical Properties of Themoplastic Resin Composition** | | | | | | | | | | |
| Modified Polyolefin Elastomer (a) | 85 | 85 | 75 | 75 | 70 | 70 | 85 | 85 | 75 | 85 |
| Polyamide (b) | 15 | 15 | 25 | 25 | 30 | 30 | 15 | 15 | 25 | 15 |
| Oil Resistance AV (%) | 55 | 20 | 65 | 62 | 40 | 41 | 68 | 65 | 64 | 67 |
| Strength $T_B$ (Kgf/cm$^2$) | 185 | 203 | 100 | 103 | 120 | 123 | 130 | 133 | 101 | 135 |
| Softness, Torsion Rigidity (Kgf/cm$^2$) | 850 | >1000 | 280 | 283 | 380 | 387 | 524 | 525 | 290 | 520 |
| Moldability MFR (g/10 min.) | 25 | 35 | 6 | 6 | 9 | 9 | 27 | 28 | 5 | 25 |
| Resistnace to Heat Aging, $A_B$ ($E_B$)(%) | 96 | 95 | 98 | 96 | 97 | 99 | 97 | 98 | 99 | 98 |

Note
E: Example
R: Comparative Example
*: Hydroxypropylmethacrylate

## Example 16

A blend of 20 parts by weight of the graft-modified polyolefin elastomer (a) prepared in the same manner as described in Example 1 and 80 parts by weight of the same polyamide (Nylon 6 A1030BRF) as used in Example 1 was extruded at 250°C in a nitrogen atmosphere by using a monoaxial extruder having an L/D ratio of 30 and a screw diameter of 50 mm to obtain a polyamide-rich resin composition.

The composition was dried and was formed into a test piece by using an injection molding machine (Model IS-22P supplied by Toshiba Kikai, set temperature = 240°C, mold temperature = 80°C), and the physical properties were determined according to the following methods.

(Rigidity)

The flexural test was carried out according to ASTM D-790, and a test piece having a size of 127 mm x 12.7 mm x 3.2 mm was used and the bending speed was 5 mm/min. The flexural modulus (FM, kg/cm$^2$) and the flexural stress (FS, kg/cm$^2$) were measured.

(Strength)

The tensile test was carried out according to ASTM D-638. A test piece of ASTM Type IV was used, and the pulling speed was 50 mm/min. The stress at yield (YS, kg/cm$^2$) and the tensile strength at yield (TS, kg/cm$^2$) were measured.

(Impact Strength)

The Izod impact strength test was carried out according to ASTM D-256. A notched test piece having a thickness of 3 mm was used.

(Flowability)

The melt flow rate test was carried out at 230°C under a load of 2.16 kg according to ASTM D-1238.

Comparative Example 4

The procedures of Example 16 were repeated in the same manner except that the amount incorporated of maleic anhydride was changed to zero.

Example 17

The procedures of Example 16 were repeated in the same manner except that the amount of DVB was changed to zero and the amounts of the modified polyolefin elastomer (a) and the polyamide (b) were changed to 35 parts by weight and 65 parts by weight, respectively.

Example 18

The procedures of Example 16 were repeated in the same manner except that 20 parts by weight of the modified polyolefin elastomer (a) prepared in the same manner as in Example 3 except that the amounts of peroxide (A) and MAH were changed to 0.6 parts by weight and 2 parts by weight, respectively, and 80 parts by weight of the polyamide (b) were used.

Example 19

The procedures of Example 18 were repeated in the same manner except that the amount of peroxide (A) was changed to 1 part by weight and the amounts of MAH, the modified polyolefin elastomer (a) and the polyamide (b) were changed as shown in Table 2.

Comparative Example 5

The procedures of Example 16 were repeated in the same manner except that the amount of EPDM (1) was changed to 100 parts by weight, PP was not incorporated, the amount of peroxide (A) was changed to 0.05 part by weight and DVB was not incorporated.

Examples 20 and 21 and Comparative Example 6

The procedures of Example 18 were repeated in the same manner except that the amounts of EPDM (1) and PP were changed as shown in Table 2.

Example 22

The procedures of Example 16 were repeated in the same manner except that at the step of forming the modified polyolefin elastomer (a), IIR and a paraffinic process oil were incorporated in addition to EPDM (1) and PP as shown in Table 2, and the amounts of the modified polyolefin elastomer (a) and the polyamide (b) were changed as shown in Table 2.

Example 23

The procedures of Example 22 were repeated in the same manner except that 0.5 part by weight of glycidyl methacrylate was used instead of 0.5 part by weight of MAH.

Example 24

The procedures of Example 22 were repeated in the same manner except that the amounts of EPDM (1), PP, IIR, paraffinic process oil, MAH, modified polyolefin elastomer (a) and polyamide (b) were changed as shown in Table 2.

Example 25

The procedures of Example 23 were repeated in the same manner except that the amounts of EPDM (1), PP, IIR, paraffinic process oil, glycidyl methacrylate, modified polyolefin elastomer (a) and polyamide (b) were changed as shown in Table 2.

Examples 26 and 27

The procedures of Example 23 were repeated in the same manner as in Example 23 except that EPDM (1), PP, IIR, paraffinic process oil, hydroxypropyl methacrylate, modified polyolefin elastomer (a) and polyamide were incorporated in amounts shown in Table 2.

Example 28

The procedures of Example 10 were repeated in the same manner except that hydroxypropyl methacrylate was used instead of maleic anhydride.

Example 29

The procedures of Example 14 were repeated in the same manner except that hydroxypropyl methacrylate was used instead of maleic anhydride.

Table 2

| | E16 | R4 | E17 | E18 | E19 | R5 | E20 | E21 |
|---|---|---|---|---|---|---|---|---|
| **Composition (parts by weight) of Modified Polyolefin Elastomer (a)** | | | | | | | | |
| EPDM | 80 | 80 | 80 | 80 | 80 | 100 | 90 | 63 |
| Polypropylene | 20 | 20 | 20 | 20 | 20 | - | 10 | 37 |
| Butyl Rubber | - | - | - | - | - | - | - | - |
| Oil | - | - | - | - | - | - | - | - |
| Maleic Anhydride | 0.5 | 0 | 0.5 | 2 | 5 | 0.5 | 0.5 | 0.5 |
| Glycidyl Methacrylate | - | - | - | - | - | - | - | - |
| Gel Content (% by weight) | 93 | 90 | 94 | 96 | 98 | 10 | 90 | 94 |
| **Composition (parts by weight) and Physical Properties of Thermoplastic Resin Composition** | | | | | | | | |
| Modified Polyolefin Elastomer (a) | 20 | 20 | 35 | 20 | 20 | 20 | 20 | 20 |
| Polyamide (b) | 80 | 80 | 65 | 80 | 80 | 80 | 80 | 80 |
| FM ($Kg/cm^2$) | 20000 | 19800 | 17100 | 20100 | 20100 | 17900 | 19900 | 20500 |
| FS ($Kg/cm^2$) | 737 | 730 | 610 | 750 | 755 | 630 | 730 | 750 |
| YS ($Kg/cm^2$) | 488 | 470 | 420 | 490 | 485 | 440 | 485 | 495 |
| TS ($Kg/cm^2$) | 565 | 550 | 510 | 570 | 565 | 515 | 550 | 585 |
| Izod Impact Strength (Kg.cm/cm) | | | | | | | | |
| 23°C | N.B. | 15.6 | N.B. | N.B. | N.B. | N.B. | N.B. | N.B. |
| 0°C | N.B. | 7.5 | N.B. | N.B. | N.B. | 15.5 | N.B. | N.B. |
| -20°C | 20.5 | 6.7 | 55.3 | 22.3 | 21.5 | 12.5 | 30.6 | 15.3 |
| -40°C | 15.4 | 5.9 | 25.0 | 16.5 | 15.8 | 10.0 | 20.8 | 12.6 |
| MFR (g/10 min.) | 2.7 | 0.2 | 2.1 | 2.5 | 2.0 | 0.5 | 2.3 | 3.5 |

Note

E: Example   R: Comparative Example   N.B. :not broken   *: Hydroxypropylemethacrylate

Tabel 2 (continued)

| Composition (parts by weight) of Modified Polyolefin Elastomer (a) | R6 | E22 | E23 | E24 | E25 | E26 | E27 |
|---|---|---|---|---|---|---|---|
| EPDM | 8 | 80 | 80 | 60 | 60 | 80 | 60 |
| Polypropylene | 92 | 20 | 20 | 40 | 40 | 20 | 40 |
| Butyl Rubber | - | 10 | 10 | 20 | 20 | 10 | 20 |
| Oil | - | 30 | 30 | 40 | 40 | 30 | 40 |
| Maleic Anhydride | 0.5 | 0.5 | - | 0.5 | - | - | - |
| Glycidyl Methacrylate | - | - | 0.5 | - | 0.5 | 0.5* | 0.5* |
| Gel Content (% by weight) | 90 | 65 | 69 | 54 | 51 | 73 | 54 |

| Composition (parts by weight) and Physical Properties of Thermoplastic Resin Composition | R6 | E22 | E23 | E24 | E25 | E26 | E27 |
|---|---|---|---|---|---|---|---|
| Modified Polyolefin Elastomer (a) | 20 | 20 | 20 | 20 | 20 | 20 | 20 |
| Polyamide (b) | 80 | 80 | 80 | 80 | 80 | 80 | 80 |
| FM (Kg/cm$^2$) | 21000 | 19500 | 19700 | 20100 | 20200 | 19800 | 20300 |
| FS (Kg/cm$^2$) | 760 | 730 | 745 | 760 | 765 | 750 | 765 |
| YS (Kg/cm$^2$) | 500 | 480 | 480 | 490 | 495 | 490 | 500 |
| TS (Kg/cm$^2$) | 595 | 560 | 555 | 570 | 575 | 565 | 575 |
| Izod Impact Strength (Kg.cm/cm) | | | | | | | |
| 23°C | N.B. | N.B. | N.B. | N.B. | N.B. | N.B. | N.B. |
| 0°C | 9.0 | N.B. | N.B. | N.B. | N.B. | N.B. | N.B. |
| -20°C | 7.3 | 60.5 | 55.3 | 60.1 | 60.7 | 56.0 | 61.5 |
| -40°C | 5.9 | 29.0 | 24.6 | 28.4 | 26.5 | 25.0 | 25.5 |
| MFR (g/10 min.) | 4.0 | 3.0 | 3.5 | 4.5 | 4.6 | 3.7 | 4.5 |

Note
E: Example  R: Comparative Example  N.B.: not broken  *: Hydroxypropylemethacrylate

## Claims

1. A thermoplastic resin composition which comprises (a) a partially crosslinked graft-modified thermoplastic elastomer obtainable by dynamically heat treating a blend comprising (i) 10 to 95 parts by weight of a peroxide-crosslinkable olefin copolymer rubber, (ii) 5 to 90 parts by weight of a crystalline high-molecular weight solid polymer selected from isotactic and syndiotactic homopolymers and copolymer resins of propylene, 1-butene, 1-pentene, 1-hexene, 2-methyl-1-propene, 3-methyl-1-pentene, 4-methyl-1-pentene and 5-methyl-1-hexene and polyethylene, the sum of the amounts of the components (i) and (ii) being 100 parts by weight, and (iii) 0.01 to 10 parts by weight of at least one

16

monomer selected from (1) unsaturated carboxylic acids and derivatives thereof, (2) unsaturated epoxy monomers and (3) unsaturated hydroxy monomers in the presence of an organic peroxide and (b) a polyamide, wherein the amount of the partially cross-linked graft-modified polyolefin elastomer (a) is from 5 to 50 parts by weight and the amount of the polyamide (b) is more than 50 parts by weight but not more than 95 parts by weight.

2. A thermoplastic resin composition which comprises (a) a partially crosslinked graft-modified thermoplastic elastomer obtainable by dynamically heat treating a blend comprising (i) 10 to 95 parts by weight of a peroxide-crosslinkable olefin copolymer rubber, (ii) 5 to 90 parts by weight of a crystalline high-molecular weight solid polymer selected from isotactic and syndiotactic homopolymers and copolymer resins of propylene 1-butene, 1-pentene, 1-hexene, 2-methyl-1-propene, 3-methyl-1-pentene, 4-methyl-1-pentene and 5-methyl-1-hexene, the sum of the amounts of the components (i) and (ii) being 100 parts by weight, and (iii) 0.01 to 10 parts by weight of at least one monomer selected from (1) unsaturated carboxylic acids and derivatives thereof, (2) unsaturated epoxy monomers and (3) unsaturated hydroxy monomers in the presence of an organic peroxide and (b) a polyamide, wherein the amount of the partially cross-linked graft-modified polyolefin elastomer (a) is more than 50 parts by weight but not more than 95 parts by weight and the amount of the polyamide (b) is from 5 to 50 parts by weight.

3. A composition according to claim 1 or claim 2 wherein the blend further comprises (iv) 0 to 100 parts by weight of a peroxide-non-crosslinkable rubbery substance and/or (v) 0 to 200 parts by weight of a mineral oil type softener, per 100 parts by weight of the sum of the amounts of the components (i) and (ii).

4. A composition according to any one of claims 1 to 3 comprising a polyamide of hexamethylene diamine, decamethylene diamine, dodecamethylene diamine, 2,2,3- or 2,2,4-trimethylhexamethylene diamine, 1,3- or 1,4-bis (aminomethyl)cyclohexane, bis(p-aminocyclohexyl-methane), m- or p-xylylene diamine, adipic acid, suberic acid, sebacic acid, cyclohexane-dicarboxylic acid, terephthalic acid or isophtalic acid, or a polyamide or E-amino caproic acid, 11-amino-undecanoic acid, E-caprolactam or ω-laurolactam, a copolyamide thereof or a mixture of such polyamides.

5. A composition according to any one of claims 1 to 4 wherein the polyamide is selected from nylon 6, nylon 66, nylon 610, nylon 9, nylon 11, nylon 12, nylon 6/66, nylon 66/610 and nylon 6/11.

6. A composition according to any one of claims 1 to 5 wherein the crosslinkable olefin copolymer (a) is a copolymer of ethylene, propylene and 5-ethylidene-2-norbornene or of ethylene, propylene, 5-ethylidene-2-norbornene and dicyclopentadiene.

7. A composition according to any one of claims 1 to 6 wherein the unsaturated epoxy monomer is selected from glycidyl acrylate, glycidyl methacrylate and glycidyl p-styrylcarboxylate, allyl glycidyl ether, 2-methylallyl glycidyl ether, o-allylphenol glycidyl ether, m-allylphenol glycidyl ether, m-allylphenol glycidyl ether, p-allylphenol glycidyl ether, isopropenylphenol glycidyl ether, o-vinylphenol glycidyl ether, m-vinylphenol glycidyl ether and p-vinylphenol glycidyl ether, and 2-(o-vinylphenyl)-ethylene oxide, 2-(p-vinylphenyl)-ethylene oxide, 2-(o-vinylphenyl)-propylene oxide, 2-(p-vinylphenyl)-propylene oxide, 2-(o-allylphenyl)-ethylene oxide, 2-(p-allylphenyl)-ethylene oxide, 2-(o-allylphenyl)-propylene oxide, 2-(p-allylphenyl)-propylene oxide, p-glycidylstyrene, 3,4-epoxy-1-butene, 3,4-epoxy-3-methyl-1-butene, 3,4-epoxy-1-pentene, 3,4-epoxy-3-methyl-1-pentene, 5,6-epoxy-1-hexene, vinylcyclohexene mono-oxide, allyl-2,3-epoxy-cyclopentyl ether, mono- and di-glycidyl esters of maleic acid, itaconic acid, citraconic acid, butene-tricarboxylic acid, endo-cis-bicyclo[2,2,1]hept-5-ene-2,3-dicarboxylic acid and endo-cis-bicyclo[2,2,1]hept-5-ene-2-methyl-2,3-dicarboxylic acid or the unsaturated hydroxy monomer is selected from hydroxyethyl acrylate, hydroxypropyl acrylate, hydroxyethyl methacrylate, hydroxypropyl methacrylate, polyethylene glycol monomethacrylate and polypropylene glycol monomethacrylate or the unsaturated carboxylic acid or derivative thereof is selected from acrylic acid, methacrylic acid, maleic acid, fumaric acid, itaconic acid, citraconic acid, tetrahydrophthalic acid, bicyclo[2,2,1] hept-2-ene-5,6-dicarboxylic acid, maleic anhydride, itaconic anhydride, citraconic anhydride, tetrahydrophthalic anhydride, bicyclo[2,2,1]hept-2-ene-5,6-dicarboxylic anhydride, methyl acrylate, methyl methacrylate, dimethyl maleate, monomethyl maleate, diethyl fumarate, dimethyl itaconate, diethylcitraconate, dimethyl tetrahydrophthalate and dimethyl bicyclo[2,2,1]hept-2-

17

ene-5,6-dicarboxylate.

8. A process for producing a composition according to any one of claims 1 to 7 comprising blending the peroxide-crosslinkable olefin copolymer, olefinic plastic and unsaturated carboxylic acid or derivative thereof, unsaturated epoxy monomer or unsaturated hydroxy monomer, dynamically heat treating the blend in the presence of an organic peroxide and admixing the partially cross-linked grafted modified polyolefin elastomer thus produced with a polyamide.

**Patentansprüche**

1. Thermoplastische Harz Zusammensetzung, welche umfasst (a) ein teilvernetztes pfropfmodifiziertes thermoplastisches Elastomer, erhältlich durch dynamische Wärmebehandlung einer Mischung, umfassend (i) 10 bis 95 Gewichtsteile eines peroxidisch-vernetzbaren Olefin Copolymer Gummis, (ii) 5 bis 90 Gewichtsteile eines kristallinen hochmolekularen festen Polymers, ausgewählt aus isotaktischen und syndiotaktischen Homopolymeren und Copolymer Harten von Propylen, 1-Buten, 1-Penten, 1-Hexen, 2-Methyl-1-propen, 3-Methyl-1-penten, 4-Methyl-1-penten und 5-Methyl-1-hexen und Polyethylen, wobei die Summe der Mengen der Komponenten (i) und (ii) 100 Gewichtsteile beträgt, und (iii) 0.01 bis 10 Gewichtsteile, mindestens eines Monomers, ausgewählt aus (1) ungesättigten Carbonsäuren und Derivaten davon, (2) ungesättigten Epoxymonomeren, und (3) ungesättigten Hydroxymonomeren, in Gegenwart eines organischen Peroxides, und (b) ein Polyamid, in welcher Zusammensetzung die Menge des teilvernetzten, pfropfmodifizierten Polyolefin Elastomers (a) 5 bis 50 Gewichtsteile beträgt und die Menge des Polyamides (b) mehr als 50 Gewichtsteile aber nicht mehr als 95 Gewichtsteile ist.

2. Thermoplastische Hart Zusammensetzung, welche umfasst (a) ein teilvernetztes pfropfmodifiziertes thermoplastisches Elastomer, erhältlich durch dynamische Wärmebehandlung einer Mischung, umfassend (i) 10 bis 95 Gewichtsteile eines peroxidisch-vernetzbaren Olefin Copolymer Gummis, (ii) 5 bis 90 Gewichtsteile eines kristallinen hochmolekularen festen Polymers, ausgewählt aus isotaktischen und syndiotaktischen Homopolymeren und Copolymer Harten von Propylen, 1-Buten, 1-Penten, 1-Hexen, 2-Methyl-1-propen, 3-Methyl-1-penten, 4-Methyl-1-penten und 5-Methyl-1-hexen, wobei die Summe der Mengen der Komponenten (i) und (ii) 100 Gewichtsteile beträgt, und (iii) 0.01 bis 10 Gewichtsteile, mindestens eines Monomers, ausgewählt aus (1) ungesättigten Carbonsäuren und Derivaten davon, (2) ungesättigten Epoxymonomeren, und (3) ungesättigten Hydroxymonomeren, in Gegenwart eines organischen Peroxides, und (b) ein Polyamid, in welcher Zusammensetzung die Menge des teilvernetzten, pfropfmodifizierten Polyolefin Elastomers (a) mehr als 50 Gewichtsteile, aber nicht mehr als 95 Gewichtsteile, beträgt, und die Menge des Polyamides (b) von 5 bis 50 Gewichtsteile ist.

3. Zusammensetzung gemäss Anspruch 1 oder 2, worin die Mischung weiter umfasst (iv) 0 bis 100 Gewichtsteile einer peroxidisch-nicht vernetzbaren Gummisubstanz und/oder (v) 0 bis 200 Gewichtsteile eines Weichmachers vom Typus Mineralöl, pro 100 Gewichtsteile der Summe der Mengen der Komponenten (i) und (ii).

4. Zusammensetzung gemäss einem der Ansprüche 1 bis 3, umfassend ein Polyamid von Hexamethylendiamin, Decamethylendiamin, Dodecamethylendiamin, 2,2,3- oder 2,2,4-Trimethylhexamethylendiamin, 1,3- oder 1,4-bis(Aminomethyl)cyclohexan, bis(p-Aminocyclohexyl-methan), m- oder p-Xylylendiamin, Adipinsäure, Suberinsäure, Sebacinsäure, Cyclohexan-dicarbonsäure, Terephthalsäure oder Isophthalsäure, oder ein Polyamid oder E-Aminocapronsäure, 11-Aminoundecansäure, E-Caprolactam oder ω-Laurolactam, ein Copolyamid davon, oder eine Mischung solcher Polyamide.

5. Zusammensetzung gemäss einem der Ansprüche 1 bis 4, worin das Polyamid ausgewählt ist, aus Nylon 6, Nylon 66, Nylon 610, Nylon 9, Nylon 11, Nylon 12, Nylon 6/66, Nylon 66/610 und Nylon 6/11.

6. Zusammensetzung gemäss einem der Ansprüche 1 bis 5, worin das vernetzbare Olefin Copolymer (a) ein Copolymer von Ethylen, Propylen und 5-Ethyliden-2-norbornen oder von Ethylen, Propylen, 5-Ethyliden-2-norbornen und Dicyclopentadien ist.

7. Zusammensetzung gemäss einem der Ansprüche 1 bis 6, worin das ungesättigte Epoxy Monomer ausgewählt ist aus Glycidylacrylat, Glycidylmethacrylat und Glycidyl-p-styrylcarboxylat, Allylglycidylether, 2-Methylallylglycidylether, o-Allylphenolglycidylether, m-Allylphenolglycidylether, m-Allylphenolglycidylether, p-Allylphenolglycidylether, Isopropenylphenolglycidylether, o-Vinylphenolglycidylether, m-Vinylphenolglycidylether und p-Vinylphenolglycidylether, und 2-(o-Vinylphenyl)-ethylenoxid, 2-(p-Vinylphenyl)-ethylenoxid, 2-(o-Vinylphenyl)-propylenoxid, 2-(p-Vinylphenyl)-propylenoxid, 2-(o-Allylphenyl)-ethylenoxid, 2-(p-Allylphenyl)ethylenoxid, 2-(o-Allylphenyl)-propylenoxid, 2-(p-Allylphenyl)propylenoxid, p-Glycidylstyrol, 3,4-Epoxy-1-buten, 3,4-Epoxy-3-methyl-1-buten, 3,4-Epoxy-1-penten, 3,4-Epoxy-3-methyl-1-penten, 5,6-Epoxy-1-hexen, Vinylcyclohexenmono-oxid, Allyl-2,3-Epoxycyclopentylether, Mono- und Di-glycidylester von Maleinsäure, Itaconsäure, Citraconsäure, Butentricarbonsäure, Endo-cis-bicyclo[2,2,1]hept-5-en-2,3-dicarbonsäure und Endo-cis-bicyclo[2,2,1]hept-5-en-2-methyl-2,3-dicarbonsäure, oder das ungesättigte Hydroxymonomer ist ausgewählt von Hydroxyethylacrylat, Hydroxypropylacrylat, Hydroxyethylmethacrylat, Hydroxypropylmethacrylat, Polyethylenglykolmonomethacrylat und Polypropylenglykolmonomethacrylat oder die ungesättigte Carbonsäure oder das Derivat davon ist ausgewählt aus Acrylsäure, Methacrylsäure, Maleinsäure, Fumarsäure, Itaconsäure, Citraconsäure, Tetrahydrophthalsäure, Bicyclo[2,2,1]hept-2-en-5,6-dicarbonsäure, Maleinsäureanhydrid, Itaconsäureanhydrid, Citraconsäureanhydrid, Tetrahydrophthalsäureanhydrid, Bicyclo[2,2,1]hept-2-en-5,6-dicarbonsäureanhydrid, Methylacrylat, Methylmethacrylat, Dimethylmaleat, Monomethylmaleat, Diethylfumarat, Dimethylitaconat, Diethylcitraconat, Dimethyltetrahydrophthalat und Dimethylbicyclo[2,2,1]hept-2-en-5,6-dicarboxylat.

8. Verfahren zur Herstellung einer Zusammensetzung gemäss einem der Ansprüche 1 bis 7, umfassend mischen des peroxidisch vernetzbaren Olefincopolymers, des Olefinhart Kunststoffes und der ungesättigten Carbonsäure oder eines Derivates davon, des ungesättigten Epoxymonomers oder ungesättigten Hydroxymonomers, dynamische Wärmebehandlung der Mischung in Gegenwart eines organischen Peroxides, und Zumischen des teilvernetzten pfropfmodifizierten Polyolefinelastomers, das so hergestellt wurde, mit einem Polyamid.

## Revendications

1. Composition de résine thermoplastique, qui comprend : (a) un élastomère thermoplastique modifié par greffage, partiellement réticulé, que l'on peut obtenir en traitant par la chaleur en régime dynamique un mélange comprenant (i) 10 à 95 parties en poids d'un caoutchouc copolymère d'oléfine, réticulable par un peroxyde, (ii) 5 à 90 parties en poids d'un polymère solide cristallin, de masse moléculaire élevée, choisi parmi les homopolymères, isotactiques ou syndiotactiques, et les résines copolymères de propylène, 1-butène, 1-pentène, 1-hexène, 2-méthyl-1-propène, 3-méthyl-1-pentène, 4-méthyl-1-pentène et 5-méthyl-1-hexène, et le polyéthylène, la somme des quantités des constituants (i) et (ii) représentant 100 parties en poids, et (iii) 0,01 à 10 parties en poids d'au moins un monomère choisi parmi (1) les acides carboxyliques insaturés et leurs dérivés, (2) les monomères époxy insaturés et (3) les monomères hydroxylés insaturés, en présence d'un peroxyde organique,
   et (b) un polyamide,
   la quantité de l'élastomère polyoléfine modifié par greffage, partiellement réticulé (a) représentant de 5 à 50 parties en poids et la quantité du polyamide (b) représentant plus de 50 parties en poids, mais pas plus de 95 parties en poids.

2. Composition de résine thermoplastique, qui comprend :
   (a) un élastomère thermoplastique modifié par greffage, partiellement réticulé, que l'on peut obtenir en traitant par la chaleur en régime dynamique un mélange comprenant (i) 10 à 95 parties en poids d'un caoutchouc copolymère d'oléflne, réticulable par un peroxyde, (ii) 5 à 90 parties en poids d'un polymère solide cristallin, de masse moléculaire élevée, choisi parmi les homopolymères, isotactiques ou syndiotactiques, et les résines copolymères de propylène, 1-butène, 1-pentène, 1-hexène, 2-méthyl-1-propène, 3-méthyl-1-pentène, 4-méthyl-1-pentène et 5-méthyl-1-hexène, la somme des quantités des constituants (i) et (ii) représentant 100 parties en poids, et (iii) 0,01 à 10 parties en poids d'au moins un monomère choisi parmi (1) les acides carboxyliques insaturés et leurs dérivés, (2) les monomères époxy insaturés et (3) les monomères hydroxylés insaturés, en présence d'un peroxyde organique,
   et (b) un polyamide,
   la quantité de l'élastomère polyolé/fine modifié par greffage, partiellement réticulé (à) représentant plus de 50 parties en poids, mais pas plus de 95 parties en poids et la quantité du polyamide (b) représentant de 5 à 50 parties en poids.

3. Composition selon la revendication 1 ou 2, pour laquelle le mélange comprend en outre (iv) 0 à 100 parties en poids d'un produit caoutchouteux, non réticulable par un peroxyde, et/ou (v) 0 à 200 parties en poids d'un plastifiant du type huile minérale, pour 100 parties en poids au total des constituants (i) et (ii).

4. Composition selon l'une quelconque des revendications 1 à 3, comprenant un polyamide obtenu à partir d'hexaméthylène diamine, décaméthylène diamine, dodécaméthylène diamine, 2,2,3- ou 2,2,4-triméthylhexaméthylène diamine, 1,3- ou 1,4-bis(aminométhyl)-cyclohexane, bis(p-aminocyclohexyl)-méthane, m- ou p-xylylène diamine, acide adipique, acide subérique, acide sébacique, acide cyclohexane-dicarboxylique, acide téréphtalique ou isophtalique, ou un polyamide obtenu à partir d'acide $\epsilon$-aminocaproïque, acide 11-amino-undécanoïque, $\epsilon$-caprolactame ou $\omega$-laurolactame, un copolyamide obtenu à partir des composés précédents, ou un mélange de tels polyamides.

5. Composition selon l'une quelconque des revendications 1 à 4, dans laquelle le polyamide est choisi parmi le nylon 6, le nylon 66, le nylon 610, le nylon 9, le nylon 11, le nylon 12, le nylon 6/66, le nylon 66/610 et le nylon 6/11.

6. Composition selon l'une quelconque des revendications 1 à 5, pour laquelle le copolymère d'oléfine réticulable (i) est un copolymère d'éthylène, de propylène et de 5-éthylidène-2-norbornène ou un copolymère d'éthylène, de propylène, de 5-éthylidène-2-norbornène et de dicyclopentadiène.

7. Composition selon l'une quelconque des revendications 1 à 6, pour laquelle le monomère époxy insaturé est choisi parmi l'acrylate de glycidyle, le méthacrylate de glycidyle, le p-styrènecarboxylate de glycidyle, l'oxyde d'allyle et de glycidyle, l'oxyde de 2-méthylallyle et de glycidyle, l'éther glycidylique de l'o-allylphénol, l'éther glycidylique du m-allylphénol, l'éther glycidylique du p-allylphénol, l'éther glycidylique de l'isopropénylphénol, l'éther glycidylique de l'o-vinylphénol, l'éther glycidylique de m-vinylphénol, l'éther glycidylique de p-vinylphénol, le 2-(o-vinylphényl)-oxyde d'éthylène, le 2-(p-vinylphényl)-oxyde d'éthylène, le 2-(o-vinylphényl)-oxyde de propylène, le 2-(p-vinylphényl)-oxyde de propylène, le 2-(o-allylphényl)-oxyde d'éthylène, le 2-(p-allylphényl)-oxyde d'éthylène, le 2-(o-allylphényl)-oxyde de propylène, le 2-(p-allylphényl)-oxyde de propylène, le p-glycidylstyrène, le 3,4-époxy-1-butène, le 3,4-époxy-3-méthyl-1-butène, le 3,4-époxy-1-pentène, le 3,4-époxy-3-méthyl-1-pentène, le 5,6-époxy-1-hexène, le mono-oxyde de vinylcyclohexène, l'oxyde d'allyle et de 2,3-époxy-cyclopentyle, et les esters monoglycidyliques ou di-glycidyliques de l'acide maléique, de l'acide itaconique, de l'acide citraconique, de l'acide butène-tricarboxylique, de l'acide endo-cis-bicyclo[2,2,1]-hept-5-ène-2,3-dicarboxylique ou de l'acide endo-cis-bicyclo[2,2,1]hept-5-ène-2-méthyl-2,3-dicarboxylique, ou le monomère hydroxylé insaturé est choisi parmi l'acrylate d'hydroxyéthyle, l'acrylate d'hydroxypropyle, le méthacrylate d'hydroxyéthyle, le méthacrylate d'hydroxypropyle, le monométhacrylate de polyéthylèneglycol et le monométhacrylate de polypropylèneglycol, ou l'acide carboxylique insaturé ou son dérivé est choisi parmi l'acide acrylique, l'acide méthacrylique, l'acide maléique, l'acide fumarique, l'acide itaconique, l'acide citraconique, l'acide tétrahydrophtalique, l'acide bicyclo[2,2,1]hept-2-ène-5,6-dicarboxylique, l'anhydride maléique, l'anhydride itaconique, l'anhydride citraconique, l'anhydride tétrahydrophtalique, l'anhydride de l'acide bicyclo[2,2,1]hept-2-ène-5,6-dicarboxylique, l'acrylate de méthyle, le méthacrylate de méthyle, le maléate de diméthyle, le maléate de monométhyle, le fumarate de diéthyle, l'itaconate de diméthyle, le citraconate de diéthyle, le tétrahydrophtalate de diméthyle et le bicyclo[2,2,1]hept-2-ène-5,6-dicarboxylate de diméthyle.

8. Procédé de préparation d'une composition selon l'une quelconque des revendications 1 à 7, qui comprend le mélange du copolymère d'oléfine, réticulable par un peroxyde, de la matière plastique oléfinique et de l'acide carboxylique insaturé ou de son dérivé, du monomère époxy insaturé ou du monomère hydroxylé insaturé, le traitement par la chaleur, en régime dynamique, du mélange en présence d'un peroxyde organique, et le mélange de l'élastomère polyoléfine modifié par greffage, partiellement réticulé, ainsi produit, avec un polyamide.